# EUROPEAN PATENT SPECIFICATION

(11) **EP 3 686 045 B1**
(45) Date of publication and mention of the grant of the patent: **22.02.2023**
(21) Application number: 17926313.2
(22) Date of filing: 30.09.2017
(51) Int. Cl.: B60L 5/28, B60L 5/20

(54) **TROLLEY POLE ACTUATING MECHANISM AND TROLLEYBUS USING THE SAME**
BETÄTIGUNGSMECHANISMUS FÜR OBERLEITUNGSSTANGE UND OBERLEITUNGSBUS, DER DENSELBEN VERWENDET
MECANISME D'ACTIONNEMENT DE PERCHE DE CHARIOT ET TROLLEYBUS L'UTILISANT

(30) Priority: 19.09.2017 CN 201710847480
(43) Date of publication of application: 29.07.2020
(73) Proprietor: Zhou, Jinbin, Guangzhou, Guangdong 510315 (CN)
(72) Inventor: Zhou, Jinbin, Guangzhou, Guangdong 510315 (CN)
(74) Representative: Patrade A/S
(86) International application number: PCT/CN2017/104738
(87) International publication number: WO 2019/056412

(56) References cited:
- EP-A2- 2 699 445
- EP-B1- 2 699 445
- CN-A- 102 092 296
- CN-A- 104 527 436
- CN-A- 104 709 095
- CN-A- 104 736 375
- CN-U- 203 651 491
- CN-U- 207 207 761
- JP-A- 2009 055 674
- US-A1- 2014 345 398
- US-A1- 2016 090 008

## Description

### TECHNICAL FIELD

The following relates to the field of trolleybus, in particular to a trolley pole actuating mechanism and trolleybus using the same.

### BACKGROUND OF THE INVENTION

Trolleybus, being called as "Eco-friendly Bus", is powered directly by electricity which is a secondary energy. Compared with a normal bus, the trolleybus has the advantages of energy-saving, environment-friendly, comfortable and sanitary; While compared with an electric automobile, the trolleybus can greatly reduce the expensive batteries, its own weight and cost.

The trolleybus needs an uninterrupted power supply from the power grid, and generally has a trolley pole in contact with the power line. Currently the trolley poles in a trolleybus are operated up or down directly or indirectly by person, to get the trolley poles in contact with the power lines. Specifically, the driver needs to stop the trolleybus in a designated area, then lift up the trolley pole to capture the power line. Such operation not only decreases the efficiency of running the trolleybus, but also burdens and distracts the driver, easily having a risk of accident.

To solve the above described problem, Chinese patent application entitled "Trolley pole actuating mechanism of trolleybus" with application no. CN201410820058.0 and publication no. CN104527436A, discloses a trolley pole actuating mechanism comprising an electric-proportion-valve cylinder for balancing the elastic force from the lifting spring, a servo motor and multiple gears, such actuating mechanism may drive the trolley pole to move up and down or to swing, making the collector head to capture the power line automatically.

German Patent Application entitled "Fahrdraht-und Stromabnehmersystem für Elektrobusse" with application no. 20000308 and publication no. DE10012039A1, discloses a structure for precisely controlling a trolley pole, wherein a motor (either a stepping motor or a motor with a counter) is used to precisely control the movement of cylinder, thereby the trolley pole can be adjusted up or to swing, and the collector head can capture the power line automatically.

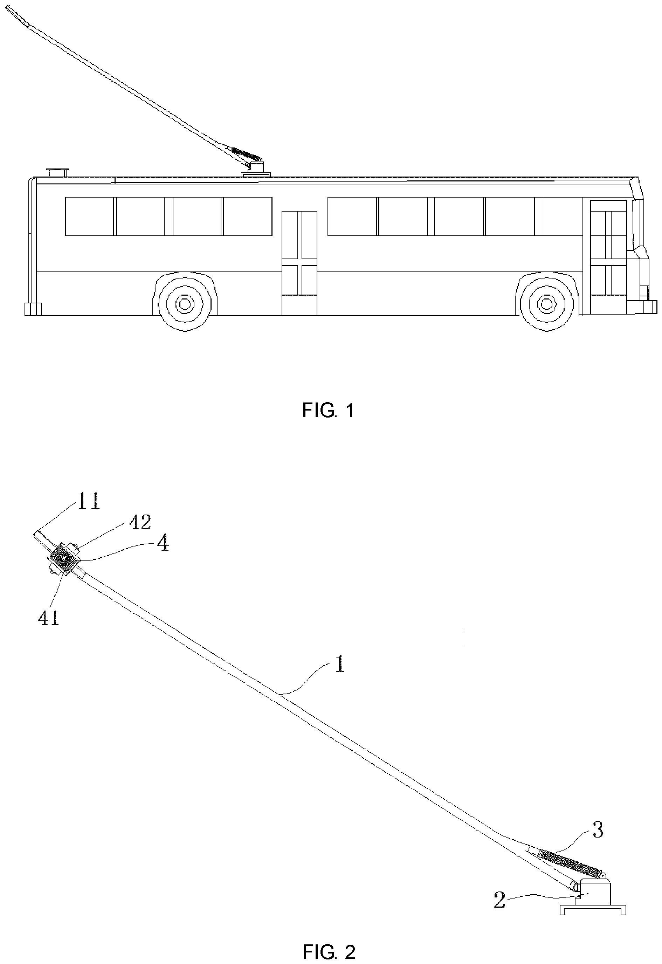

The above two patent applications have same features as shown in FIG.1, that is, a servo mechanism for driving the trolley pole is arranged at the bottom of the trolley pole, and the collector head is arranged at the top of the trolley pole, so that the forcing point where the servo mechanism applies force to the trolley pole is far away from the collector head, resulting in two following problems:
1. Sharp vibration of the trolley pole may occur during its movement, causing the collector head to capture the power line difficultly, as the trolley pole is very long, for example, up to approximately 5 meters, and has its own certain weight, whilst the foresaid forcing point and the collector head are located at the two ends of the trolley pole respectively;
2. Greater displacement for the collector head may occur, as there is a backlash in the servo mechanism, and this backlash will be magnified due to the long distance, e.g. up to 5 meters long, between the servo mechanism and the collector head.

US2014/345398A1 entitled "System and method for lowering a pantograph" discloses a system and method for lowering a pantograph includes a frame that may be extended or retracted, specifically it discloses a frame comprising a shear connection which can pivot for lowering a pantograph, which lacks the flexibility in adjusting the trolley pole due to the rigid mechanical shear connection.

EP2699445A2 entitled "Pantograph for a railway vehicle" discloses a pantograph for transmitting electrical energy between a contact wire and a rail vehicle. The system disclosed comprises a pneumatic cylinder arranged at top end of the trolley pole for controlling the pneumatic pressure to capture the bow, which also lacks the flexibility in adjusting the trolley pole as the pneumatic cylinder is connected with the bow.

JP2009055674A entitled "PANTOGRAPH" discloses a pantograph which is equipped with the current collecting slider that contacts with the trolley wire T, a support that supports the current collecting slider, and an elastic supporting mechanism, which is disadvantageous in that the elastic supporting mechanism may oscillate and transmit vibrations.

### SUMMARY OF THE INVENTION

It is an objective of the invention to provide a high-precision trolley pole actuating mechanism and a trolleybus using the same in order to overcome the defects mentioned above.

The present invention is implemented in the following technical solutions:
The invention provides a trolley pole actuating mechanism according to claim 1, comprising a trolley pole equipped with a collector head at top end thereof, a horizontal servo mechanism for driving the trolley pole to swing, a luffing servo mechanism for driving the trolley pole up or down, and an air-driving device for pushing out air; the horizontal servo mechanism and the luffing servo mechanism are both arranged at bottom end of the trolley pole and are connected to the trolley pole respectively by transmission, and the air-driving device is arranged near the top end of the trolley pole.

Further, the air-driving device comprises a first mounting base arranged near the top end of the trolley pole, and a plurality of fans arranged on the first mounting base.

Further, the fans are disposed around the trolley pole.

Further, the first mounting base comprises a plurality of first mounting portions surrounding the trolley pole, and each of the fans is mounted on one first mounting portion.

Further, the fans may be replaced with propellers.

Further, the air-driving device comprises a second mounting base arranged near the top end of the trolley pole, a plurality of air nozzles disposed on the second mounting base, and an air compressor communicated with the air nozzles, for producing high-pressure air.

Further, the air nozzles are disposed around the trolley pole.

Further, the second mounting base comprises a plurality of second mounting portions surrounding the trolley pole, and each of the air nozzles is mounted on one second mounting portion.

Further, the trolley pole is configured with a tube, the air compressor is communicated with the plurality of air nozzles through the tube; the tube is configured within the trolley pole.

The present invention further provides a trolleybus according to claim 9, comprising a vehicle body, and a trolley pole actuating mechanism described above.

Compared with the prior art, the invention has the following benefits:
By the cooperation of the air-driving device arranged near the top end of the trolley pole, together with the horizontal servo mechanism and the luffing servo mechanism, the collector head can therefore capture the power line. As the air-driving device is arranged adjacent to the collector head, the forcing point where the air-driving device applies force to the trolley pole is near the collector head, such that the movement of collector head driven by the air-driving device produces no more vibration of the trolley pole 1. The movement of the air-driving device can compensate the displacement of the trolley pole due to the vibrations of the trolley pole caused by the action of the horizontal servo mechanism and the luffing servo mechanism, as well as the displacement of the collector head due to a significantly magnified backlash of the collector head caused by the action of the horizontal servo mechanism and the luffing servo mechanism. In this way, the collector head 11 can be controlled to capture the power line precisely, such that the driver can control the trolley pole to capture the power line automatically during the trolleybus is running.

### BRIEF DESCRIPTION OF THE DRAWINGS

Specific embodiments of the present invention are described in details hereafter with reference to the drawings, where
FIG. 1 is a structure schematic view of an existing trolleybus;
FIG. 2 is a structure schematic view of a trolley pole actuating mechanism according to Embodiment 1 of the present invention;
FIG. 3 is a partial enlarged view of FIG. 2;
FIG. 4 is a structure schematic view of a trolley pole actuating mechanism according to Embodiment 2 of the present invention;
FIG. 5 is a partial enlarged view of FIG. 4;
FIG. 6 is a structure schematic view of a trolley pole actuating mechanism according to Embodiment 3 of the present invention;
FIG. 7 is a partial enlarged view of FIG. 6;
FIG. 8 is a structure schematic view of a trolley pole actuating mechanism according to Embodiment 4 of the present invention;
FIG. 9 is a partial enlarged view of FIG. 8;
FIG. 10 is a structure schematic view of a trolleybus according to Embodiment 1 of the present invention;
FIG. 11 is a structure schematic view of a trolleybus according to Embodiment 2 of the present invention;
FIG. 12 is a structure schematic view of a trolleybus according to Embodiment 3 of the present invention;
FIG. 13 is a structure schematic view of a trolleybus according to Embodiment 4 of the present invention.

### LIST OF REFERENCE NUMBERS

1 - Trolley Pole;
11 - Collector Head;
2 - Horizontal Servo Mechanism;
3 - Luffing Servo Mechanism;
4 - Air-driving Device;
41 - First Mounting Base;
411 - First Mounting Portion;
42 - Fans;
43 - Second Mounting Base;
431 - Second Mounting Portion;
44 - Air Nozzle;
45 - Air Compressor;
46 - Propeller;
5 - Vehicle Body.

### DETAILED DESCRIPTION OF THE PREFERRED EMBODIMENTS

The preferred embodiments of the present invention will be described hereafter with reference to the drawings, and it is appreciated that the preferred embodiments described herein are for illustrating and explaining, but not limiting, the present invention.

### Embodiment 1

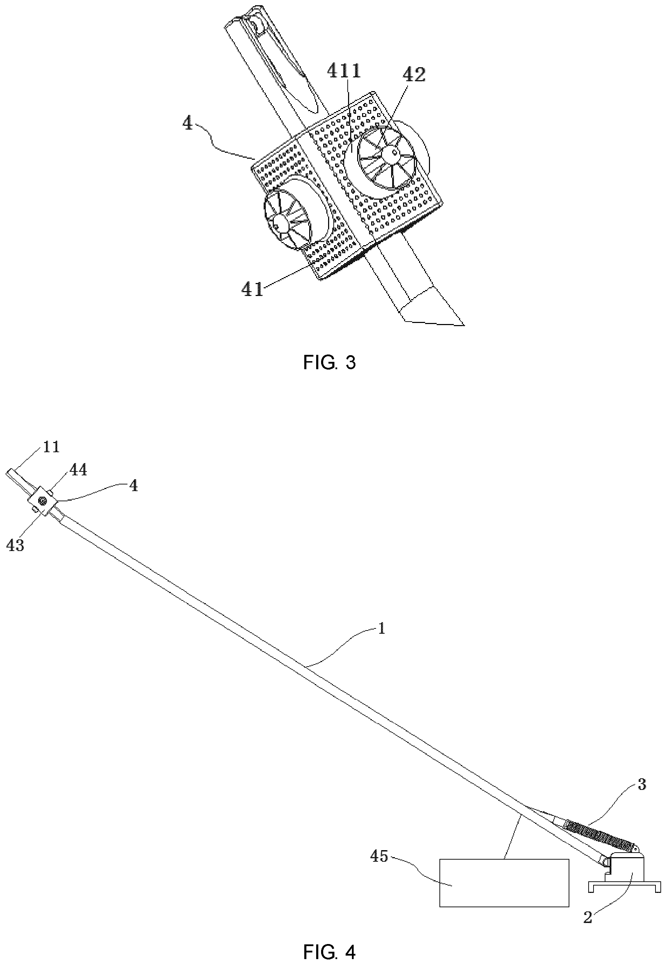

As shown in FIGs. 2 and 3, the invention provides a trolley pole actuating mechanism, comprising a trolley pole 1, a collector head 11, a horizontal servo mechanism 2, a luffing servo mechanism 3 and an air-driving device 4. The collector head 11 is arranged at top end of the trolley pole 1. The horizontal servo mechanism 2 and a luffing servo mechanism 3 are both arranged at bottom end of the trolley pole 1, and are connected to the trolley pole 1 respectively by transmission. The air-driving device 4 is arranged near the top end of the trolley pole 1. The horizontal servo mechanism 2 can provide power for driving the trolley pole 1 to swing, and the luffing servo mechanism 3 can provide power for driving the trolley pole 1 up or down. By the cooperation of the air-driving device 4 together with the horizontal servo mechanism 2 and the luffing servo mechanism 3, the collector head can therefore capture the power line. The air-driving device 4 is arranged adjacent to the collector head 11, that is, the forcing point where the air-driving device 4 applies force to the trolley pole 1 is near the collector head 11, such that the movement of collector head 11 driven by the air-driving device 4 produces no more vibration of the trolley pole 1, while the movement of the air-driving device 4 can compensate the displacement of the trolley pole 1 due to the vibrations of the trolley pole 1 caused by the action of the horizontal servo mechanism 2 and the luffing servo mechanism 3, as well as the displacement of the collector head 11 due to a significantly magnified backlash of the collector head 11 caused by the action of the horizontal servo mechanism 2 and the luffing servo mechanism 3. In this way, the collector head 11 can be controlled to capture the power line precisely, such that the driver can control the trolley pole to capture the power line automatically during the trolleybus is running.

Preferably, the air-driving device 4 is positioned below the collector head 11, and the distance between them may vary with different situations. It will be appreciated that the air-driving device 4 may be positioned at any other position adjacent to the collector head 11 without affecting the operation of the collector head 11.

Preferably, the air-driving device 4 comprises a first mounting base 41 arranged near the top end of the trolley pole 1, and a plurality of fans 42 arranged on the first mounting base 41. The spinning blades inside the fans 42 push out air, thereby driving the trolley pole 1 to move. Preferably, the plurality of fans 42 are configured around the trolley pole 1. When turning on a fan 42, the trolley pole 1 is driven towards an opposite direction. Theoretically, the trolley pole 1 may move to any direction by turning on one or more fans while adjusting the spin speed. Specifically, the first mounting base 41 comprises a plurality of first mounting portions 411 surrounding the trolley pole 1, and each fan 42 is mounted on one first mounting portion 411. In this Embodiment, the first mounting base 41 is in the shape of a cuboid having four side walls, and each of the first mounting portions 411 is arranged on each of the side walls.

Preferably, the fan 42 is a ducted fan comprising a motor and several blades, the type of which may be selected as desired in practice. It is appreciated that, the fan 42 may be any other possible type, which is not intended to limit the invention.

### Embodiment 2

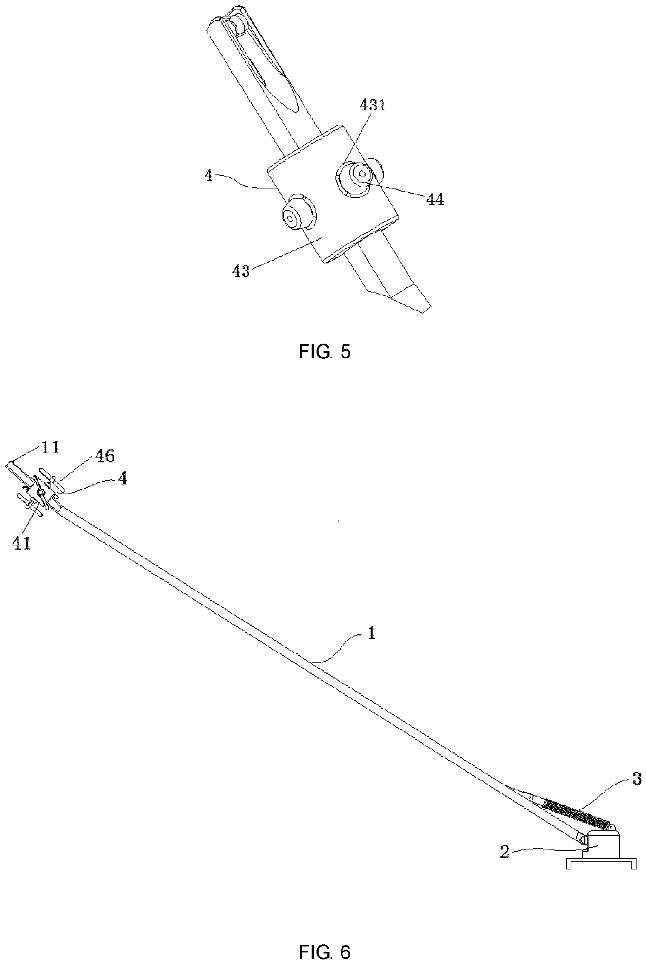

The difference between Embodiment 2 and Embodiment 1, as shown in FIGs. 4 and 5, is that the air-driving device 4 comprises a second mounting base 43 arranged near the top end of the trolley pole 1, a plurality of air nozzles 44 disposed on the second mounting base 43, and an air compressor 45 communicated with the air nozzles 44. The air compressor 45 is configured for producing high-pressure air which jets from the air nozzles 44, driving the trolley pole 1 to move.

Preferably, the plurality of air nozzles 44 are disposed around the trolley pole 1 such that trolley pole 1 can be driven to move towards the opposite direction of jet flow from the opened air nozzles 44. Theoretically, the trolley pole 1 may move to any direction by opening up one or more air nozzles 44 while adjusting the jet speed. Specifically, the second mounting base 43 comprises a plurality of second mounting portions 431 surrounding the trolley pole 1, and each of the air nozzles 44 is mounted on one second mounting portion 431. In this Embodiment, the second mounting base 43 is in the shape of cylinder where four mounting portions 431 are arranged on the peripheral surface thereof, and are spaced apart from each other.

Preferably, the trolley pole 1 is configured with a tube (not shown), through which the air compressor 45 is communicated with the plurality of air nozzles 44. Preferably, the trolley pole 1 is configured with an inner channel (not shown) for accommodating the tube. The rest structure of Embodiment 2 is the same as Embodiment 1, and will not be described in details repeatedly.

### Embodiment 3

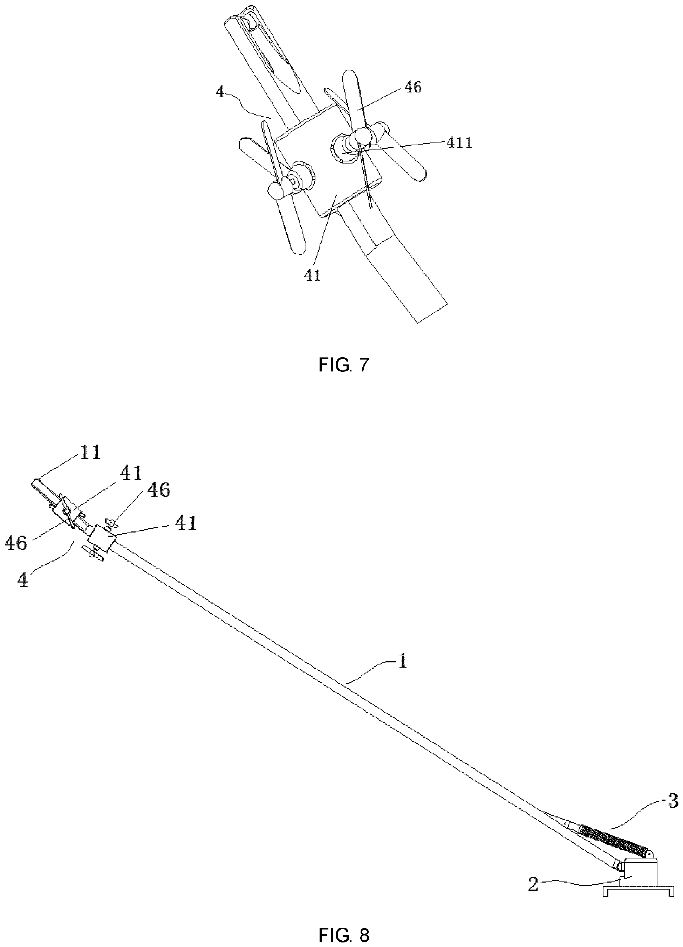

The difference between Embodiment 3 and Embodiment 1, as shown in FIGs. 6 and 7, is that the fans 42 are replaced by a plurality of propellers 46. In Embodiment 1, it is essential to have the first mounting portion 411 configured as a recess adapted for mounting the fan 42, which leads to difficulties in manufacturing the first mounting base 41, whereas in Embodiment 3, the first mounting portion 411 can simply be configured with some holes for fitting with the rotary shafts of the propellers 46, that is, the structure of first mounting portion 411 is simplified. Preferably, in this Embodiment, there are four propellers 46 in total, and the first mounting base is in the shape of cylinder where the four propellers 46 are spaced apart from each other along the peripheral surface of the first mounting base 41. The rest structure of the Embodiment 3 is the same as Embodiment 1, and will not be described in details repeatedly.

### Embodiment 4

In Embodiment 3, a plurality of propellers 46 are all arranged on the first mounting base 41, if the propellers 46 is large enough in size, the adjacent propellers 46 may possibly collide with each other during operation. To avoid the collision between the propellers 46, in this Embodiment, preferably two first mounting bases 41 are successively disposed along the trolley pole 1, and each first mounting base 41 is configured with two propellers 46 which are disposed oppositely. The space between the two mounting bases 41 is configured to ensure that the propellers 46 on the two first mounting bases 41 will not collide with each other. In this way, four propellers 46 can oriented toward different directions, and any two of the propellers 46 will not collide with each other even a large-size propeller 46 is selected. In more further forms, more first mounting bases 41 will be provided, then each of the propellers 46 is mounted on the respective first mounting bases 41 in order to avoid the collision therebetween. Alternatively, the first mounting bases 41 can be configured long enough such that the propellers 46 can be arranged offset to each other along the length of the first mounting base 41, in order to avoid the collision between the propellers. Such variations are within the scope of the invention. The rest structure of the Embodiment 4 is the same as Embodiment 3, which will not be described in details repeatedly.

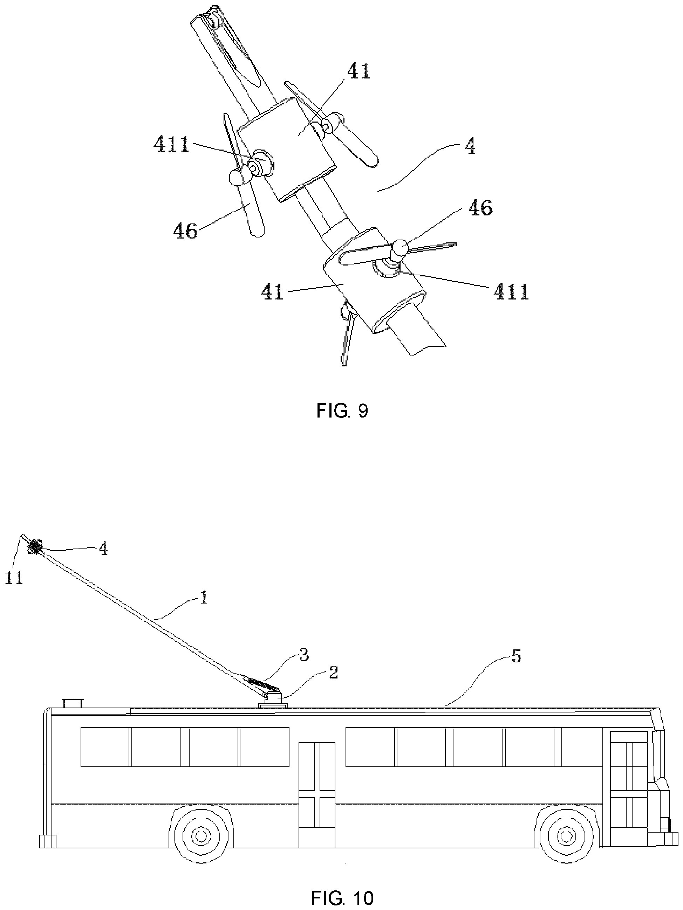

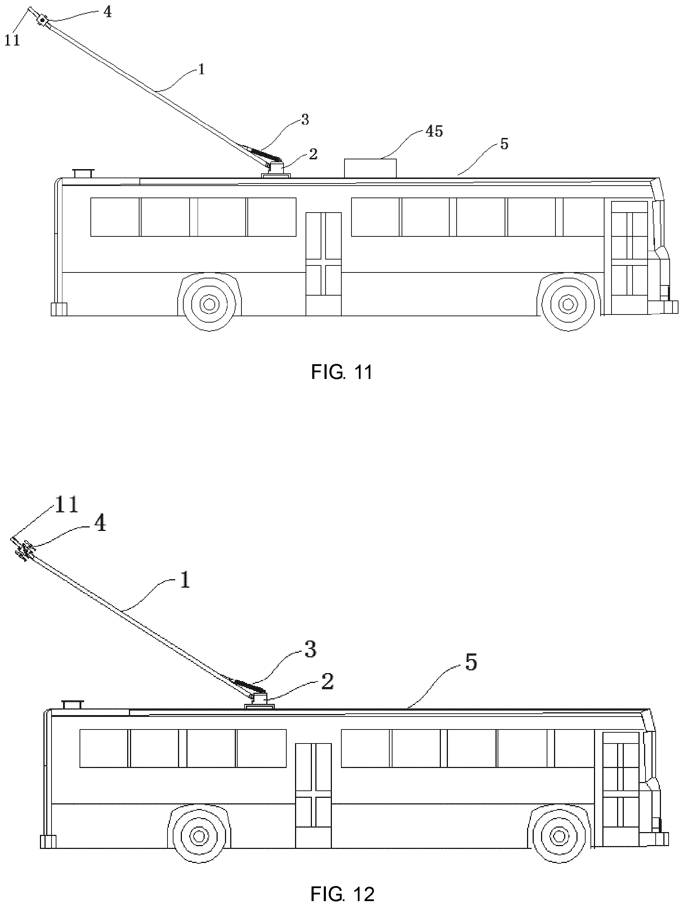

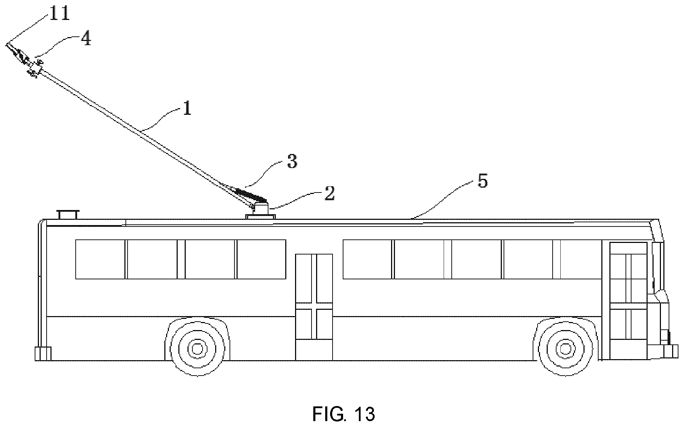

The invention further provides a trolleybus, as shown in FIGs. 10-13, comprising a vehicle body 5 and a trolley pole actuating mechanism described in the Embodiment 1, 2, 3, or 4 respectively.

The rest structure of the described trolley pole actuating mechanism and trolleybus in these Embodiments can be found in the prior art.

The embodiment described hereinbefore is merely preferred embodiment of the present invention and not for purposes of any restrictions or limitations on the invention.

The invention is merely defined by the scope of the appended claims.

## Claims

1. A trolley pole actuating mechanism comprising a trolley pole (1) equipped with a collector head (11) at top end thereof, a horizontal servo mechanism (2) for driving the trolley pole (1) to swing, a luffing servo mechanism (3) for driving the trolley pole (1) up or down, and an air-driving device (4) for pushing out air; the horizontal servo mechanism (2) and the luffing servo mechanism (3) are both arranged at bottom end of the trolley pole (1) and are connected to the trolley pole (1) respectively by transmission, and the air-driving device (4) is arranged near the top end of the trolley pole (1) wherein the air-driving device (4) comprises a first mounting base (41) arranged near the top end of the trolley pole (1), and a plurality of fans (42) arranged on the first mounting base (41).

2. The trolley pole actuating mechanism according to claim 1, **characterized in that**, the plurality of fans (42) are disposed around the trolley pole (1).

3. The trolley pole actuating mechanism according to claim 2, **characterized in that**, the first mounting base (41) comprises a plurality of first mounting portions (411) surrounding the trolley pole (1), and each of the fans (42) is mounted on one first mounting portion (411).

4. The trolley pole actuating mechanism according to any one of the claims 1-3, **characterized in that**, the fans (42) are replaced with propellers (46).

5. The trolley pole actuating mechanism according to claim 1, **characterized in that**, the air-driving device (4) comprises a second mounting base (43) arranged near the top end of the trolley pole (1), a plurality of air nozzles (44) disposed on the second mounting base (43), and an air compressor (45) communicated with the air nozzles (44), for producing high-pressure air.

6. The trolley pole actuating mechanism according to claim 5, **characterized in that**, the air nozzles (44) are disposed around the trolley pole (1).

7. The trolley pole actuating mechanism according to claim 6, **characterized in that**, the second mounting base (43) comprises a plurality of second mounting portions (431) surrounding the trolley pole (1), and each of the air nozzles (44) is mounted on one second mounting portion (431).

8. The trolley pole actuating mechanism according to claim 5, **characterized in that**, the trolley pole (1) is configured with a tube, the air compressor (45) is communicated with the plurality of air nozzles (44) through the tube; the tube is configured within the trolley pole (1).

9. A trolleybus comprising a vehicle body, and a trolley pole actuating mechanism according to any one of the claims 1-8.

## Patentansprüche

1. Betätigungsmechanismus für eine Oberleitungsstange, der eine Oberleitungsstange (1), die mit einem Abnehmerkopf (11) an ihrem oberen Ende ausgestattet ist, einen horizontalen Servomechanismus (2) zum Antreiben der Oberleitungsstange (1) zum Schwingen, einen Wipp-Servomechanismus (3) zum Antreiben der Oberleitungsstange (1) nach oben oder unten und eine Luftantriebsvorrichtung (4) zum Ausstoßen von Luft umfasst; wobei der horizontale Servomechanismus (2) und der Wipp-Servomechanismus (3) beide am unteren Ende der Oberleitungsstange (1) angeordnet sind und mit der Oberleitungsstange (1) jeweils durch eine Übertragungseinrichtung verbunden sind, und die Luftantriebsvorrichtung (4) nahe dem oberen Ende der Oberleitungsstange (1) angeordnet ist, wobei die Luftantriebsvorrichtung (4) eine erste Montagebasis (41), die nahe dem oberen Ende der Oberleitungsstange (1) angeordnet ist, und eine Vielzahl von Lüftern (42), die an der ersten Befestigungsbasis (41) angeordnet sind, umfasst.

2. Betätigungsmechanismus für eine Oberleitungsstange nach Anspruch 1, **dadurch gekennzeichnet, dass** die Vielzahl von Lüftern (42) um die Oberleitungsstange (1) herum angeordnet ist.

3. Betätigungsmechanismus für eine Oberleitungsstange nach Anspruch 2, **dadurch gekennzeichnet, dass** die erste Montagebasis (41) eine Vielzahl von ersten Montageabschnitten (411) umfasst, die die Oberleitungsstange (1) umgeben, und jeder der Lüfter (42) an einem ersten Montageabschnitt (411) montiert ist.

4. Betätigungsmechanismus für eine Oberleitungsstange nach einem der Ansprüche 1-3, **dadurch gekennzeichnet, dass** die Lüfter (42) durch Propeller (46) ersetzt sind.

5. Betätigungsmechanismus für eine Oberleitungsstange nach Anspruch 1, **dadurch gekennzeichnet, dass** die Luftantriebsvorrichtung (4) eine zweite Montagebasis (43), die nahe dem oberen Ende der Oberleitungsstange (1) angeordnet ist, eine Vielzahl von Luftdüsen (44), die an der zweiten Montagebasis (43) angeordnet sind, und einen Luftkompressor (45), der mit den Luftdüsen (44) in Verbindung steht, zum Erzeugen von Hochdruckluft umfasst.

6. Betätigungsmechanismus für eine Oberleitungsstange nach Anspruch 5, **dadurch gekennzeichnet, dass** die Luftdüsen (44) um die Oberleitungsstange (1) herum angeordnet sind.

7. Betätigungsmechanismus für eine Oberleitungsstange nach Anspruch 6, **dadurch gekennzeichnet, dass** die zweite Montagebasis (43) eine Vielzahl von zweiten Montageabschnitten (431) umfasst, die die Oberleitungsstange (1) umgeben, und jede der Luftdüsen (44) an einem zweiten Montageabschnitt (431) montiert ist.

8. Betätigungsmechanismus für eine Oberleitungsstange nach Anspruch 5, **dadurch gekennzeichnet, dass** die Oberleitungsstange (1) mit einem Rohr konfiguriert ist, der Luftkompressor (45) mit der Vielzahl von Luftdüsen (44) über das Rohr in Verbindung steht; das Rohr innerhalb der Oberleitungsstange (1) konfiguriert ist.

9. Oberleitungsbus, umfassend einen Fahrzeugaufbau und einen Betätigungsmechanismus für eine Oberleitungsstange nach einem der Ansprüche 1-8.

## Revendications

1. Mécanisme d'actionnement de perche de chariot comprenant une perche de chariot (1) équipée d'une tête collectrice (11) à son extrémité supérieure, un servomécanisme horizontal (2) pour entraîner la perche de chariot (1) en rotation, un servomécanisme de relevage (3) pour entraîner la perche de chariot (1) vers le haut ou vers le bas, et un dispositif d'entraînement pneumatique (4) pour expulser l'air ; le servomécanisme horizontal (2) et le servomécanisme de relevage (3) sont tous deux disposés à l'extrémité inférieure de la perche de chariot (1) et sont reliés à la perche de chariot (1) respectivement par transmission, et le dispositif d'entraînement pneumatique (4) est agencé près de l'extrémité supérieure de la perche de chariot (1), dans lequel le dispositif d'entraînement pneumatique (4) comprend une première base de montage (41) agencée près de l'extrémité supérieure de la perche de chariot (1), et une pluralité de ventilateurs (42) agencés sur la première base de montage (41).

2. Mécanisme d'actionnement de perche de chariot selon la revendication 1, **caractérisé en ce que** la pluralité de ventilateurs (42) sont disposés autour de la perche de chariot (1) .

3. Mécanisme d'actionnement de perche de chariot selon la revendication 2, **caractérisé en ce que** la première base de montage (41) comprend une pluralité de premières parties de montage (411) entourant la perche de chariot (1), et chacun des ventilateurs (42) est monté sur une première partie de montage (411) .

4. Mécanisme d'actionnement de perche de chariot selon l'une quelconque des revendications 1 à 3, **caractérisé en ce que** les ventilateurs (42) sont remplacés par des hélices (46).

5. Mécanisme d'actionnement de perche de chariot selon la revendication 1, **caractérisé en ce que** le dispositif d'entraînement pneumatique (4) comprend une seconde base de montage (43) disposée près de l'extrémité supérieure de la perche de chariot (1), une pluralité de buses d'air (44) disposées sur la seconde base de montage (43), et un compresseur d'air (45) communiquant avec les buses d'air (44), pour produire de l'air à haute pression.

6. Mécanisme d'actionnement de perche de chariot selon la revendication 5, **caractérisé en ce que** les buses d'air (44) sont disposées autour de la perche de chariot (1).

7. Mécanisme d'actionnement de perche de chariot selon la revendication 6, **caractérisé en ce que** la seconde base de montage (43) comprend une pluralité de secondes parties de montage (431) entourant la perche de chariot (1), et chacune des buses d'air (44) est montée sur une seconde partie de montage (431).

8. Mécanisme d'actionnement de perche de chariot selon la revendication 5, **caractérisé en ce que**, la perche de chariot (1) est configurée avec un tube, le compresseur d'air (45) est en communication avec la pluralité de buses d'air (44) à travers le tube ; le tube est configuré à l'intérieur de la perche de chariot (1).

9. Trolleybus comprenant une carrosserie de véhicule et un mécanisme d'actionnement de perche de chariot selon l'une quelconque des revendications 1 à 8.
